(19) Europäisches Patentamt
European Patent Office
Office européen des brevets

(11) **EP 1 775 547 B1**

(12) **EUROPÄISCHE PATENTSCHRIFT**

(45) Veröffentlichungstag und Bekanntmachung des Hinweises auf die Patenterteilung:
**05.12.2007 Patentblatt 2007/49**

(51) Int Cl.:
***G01B 11/06*** *(2006.01)* ***B05D 7/00*** *(2006.01)*

(21) Anmeldenummer: **06019420.6**

(22) Anmeldetag: **16.09.2006**

(54) **Verfahren zur Schichtdickebestimmung eines füllerlosen Automobillacks**

Method for layer thickness measurement of a car paint without filler primer

Procédé pour déterminer l'épaisseur d'une couche de laque d'automobile sans couche de fond

(84) Benannte Vertragsstaaten:
**DE FR GB IT**

(30) Priorität: **15.10.2005 DE 102005049441**

(43) Veröffentlichungstag der Anmeldung:
**18.04.2007 Patentblatt 2007/16**

(73) Patentinhaber: **Bayerische Motoren Werke Aktiengesellschaft**
**80809 München (DE)**

(72) Erfinder: **Nömayr, Richard, Dr.**
**81241 München (DE)**

(56) Entgegenhaltungen:
**WO-A2-20/04048888** **DE-A1- 19 754 547**
**US-A- 5 091 647**

## Beschreibung

Die Erfindung bezieht sich auf ein Verfahren zur Bestimmung der Schichtdicke eines füllerlosen Automobillacks aus mindestens zwei Basislackschichten und einer Klarlackschicht.

Die in den 70er Jahren entwickelte Technik der füllerlosen Lackierung gewinnt zunehmend wieder das Interesse der Automobilindustrie. Durch den Entfall und somit der Nacharbeit der Füllerschicht sind erhebliche Einsparungen erzielbar. Neben einer Reduzierung der Investitionskosten ergeben sich Materialeinsparungen und Durchlaufzeitenverkürzungen, die zu einem höheren Durchsatz in der Lackierlinie führen.

Die füllerlose Lackierung beinhaltet jedoch auch neue Herausforderungen. Aufgrund der reduzierten Schichtdicke wird nämlich die kathodische Elektrotauchlackschicht stärker durch die kurzwelligen Anteile des Sonnenlichtes belastet und geschädigt. Dies hat zur Folge, dass die darüberliegende Lackschicht die Haftung auf der kathodischen Tauchlackschicht verliert und delaminiert. Durch die Weiterentwicklung von Pigmenten und UV-Absorbern ist es jedoch heute möglich, Lackaufbauten füllerlos zu applizieren, ohne dass diese zur Delamination neigen. Um das Risiko der Delamination zu minimieren, muss die Durchlässigkeit eines Lackaufbaus für die kurzwelligen Sonnenlichtanteile gemessen und bewertet werden.

Aufgabe der Erfindung ist es, ein Verfahren bereitzustellen, mit dem die Mindestschichtdicke eines füllerlosen Automobillacks ermittelt werden kann, bei der keine Delaminationserscheinungen mehr auftreten.

Dies wird erfindungsgemäß mit dem im Anspruch 1 gekennzeichneten Verfahren erreicht.

In den abhängigen Ansprüchen sind vorteilhafte Ausgestaltungen der Erfindung wiedergegeben.

Nach der Erfindung werden zunächst die Grenzwerte der Lichttransmission für unterschiedliche Wellenlängen im UV- und sichtbaren UV/VIS-Bereich festgelegt, bei denen keine Delamination des jeweiligen füllerlosen Lacks beobachtet wird.

In der nachstehenden Tabelle 1 sind typische Grenzwerte angegeben.

**Tabelle 1**

| Wellenlänge nm | 280 - 400 | 401 - 460 | 462 - 500 |
|---|---|---|---|
| maximale Transmission in % | 0,03 | 0,1 | 0,5 |

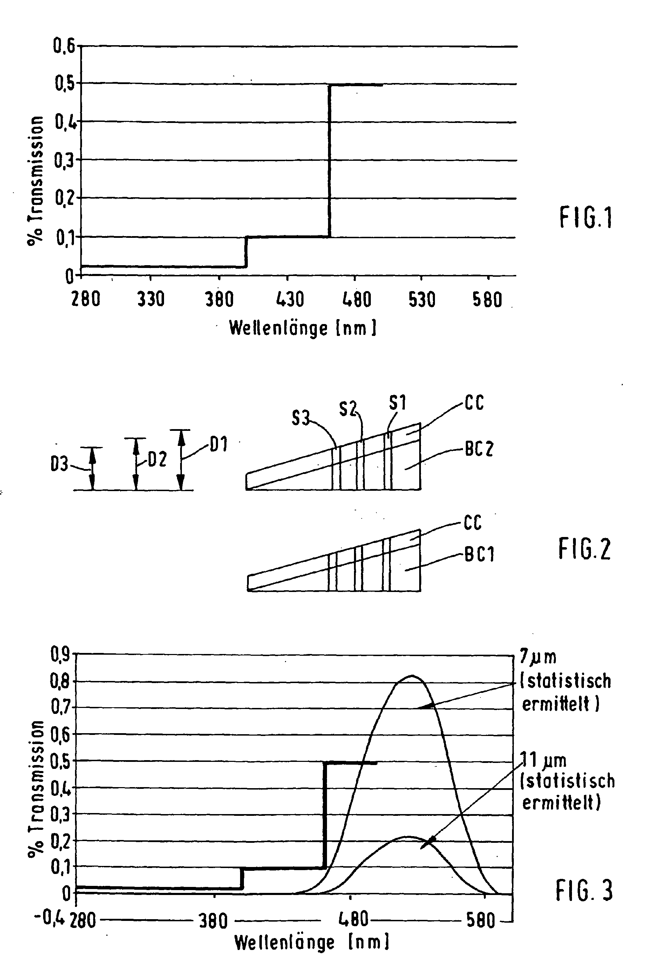

In der beigefügten Figur 1 ist, ausgehend von den Grenzwerten nach Tabelle 1, ein optimiertes Diagramm der maximalen Transmission in Abhängigkeit von der Wellenlänge dargestellt.

Bei der füllerlosen Automobillackierung wird auf den meist kathodischen Elektrotauchlack im Allgemeinen ein Basislack aus einer ersten Basislackschicht (BC1) und einer zweiten Basislackschicht (BC2) und darauf ein Klarlack appliziert. Die zweite, von der Elektrotauchlackschicht abgewandte Basislackschicht (BC2) stellt die farbgebende Schicht dar, beispielsweise eine Metallic-Lackschicht. Ihre Mindestschichtdicke wird durch ihr Farbvermögen, den sogenannten "Color-Match" festgelegt. Die Schichtdicke der zweiten Basislackschicht (BC2) ist daher vorgegeben.

Um die Schichtdicke des Lackaufbaus zu ermitteln, bei der die vorgegebenen Grenzwerte der Lichttransmission eingehalten werden, kommt es daher auf die Schichtdicke der ersten, der Elektrotauchlackschicht zugewandten Basislackschicht (BC1) an.

Zur Bestimmung der Schichtdicke der ersten Basislackschicht (BC1) wird erfindungsgemäß sowohl von der ersten (BC1) wie der zweiten (BC2) Basislackschicht eine Keillackierung angefertigt, wobei auf jede Keillackierung die gleiche Klarlackschicht, also eine Klarlackschicht gleicher Zusammensetzung mit gleicher konstanter Schichtdicke, appliziert wird.

In der beigefügten Figur 2 ist die Keillackierung für die erste Basislackschicht (BC1) und die zweite Basislackschicht (BC2) mit der Klarlackschicht (CC) schematisch dargestellt.

Die Schichtdicke der Basislackschichten (BC1 und BC2) wird magnetisch induktiv ermittelt. Aus den Keillakkierungen werden in Abständen Proben S1, S2, S3, ... unterschiedlicher Schichtdicke D1, D2, D3, ... geschnitten. Die Transmission der Proben wird beispielsweise mit einem UV/VIS-Spektrometer mit Hilfe einer Ulbrichtkugel vermessen, mit der auch das gestreute transmittierte Licht erfasst wird.

Die Transmissionsmessungen der Proben der Keillackierungen werden bei unterschiedlichen Wellenlängen durchgeführt, und zwar im Hinblick auf die Tabelle 1 und Figur 1, insbesondere im Bereich von 280 nm bis 500 nm.

Die erhaltenen Transmissionswerte werden erfindungsgemäß in Absorptionswerte umgerechnet. Grundlage für die Umrechung bildet das Lambert-Beersche Gesetz, das wie folgt lautet:

$$I = I_0 \cdot e^{-\alpha \cdot \{J\} L} \quad .$$

Darin bedeuten:

$I$ = Intensität des transmittierten Lichts
$I_0$ = Intensität des einfallenden Lichts
$\alpha$ = Proportionalitätskoeffizient
$[J]$ = Konzentration des Absorbens
$L$ = Länge der Lichtstrecke in der Probe.

Durch Umformungen erhält man daraus den folgenden Zusammenhang zwischen Transmission und Absorption gemäß Formel (1),

$$Absorption = -\lg(Transmission) \qquad (1) \quad .$$

In Figur 3 ist das optimierte Diagramm nach Figur 1 für die maximale Transmission in Abhängigkeit von der Wellenlänge mit der gemessenen Transmission der ersten Basislackschicht (BC1) mit einer Schichtdicke von 7 $\mu$m und 11 $\mu$m verglichen. Wie daraus ersichtlich, werden bei einer Schichtdicke von 7 $\mu$m die Grenzwerte der Transmission überschritten, bei einer Schichtdicke von 11 $\mu$m jedoch deutlich unterschritten.

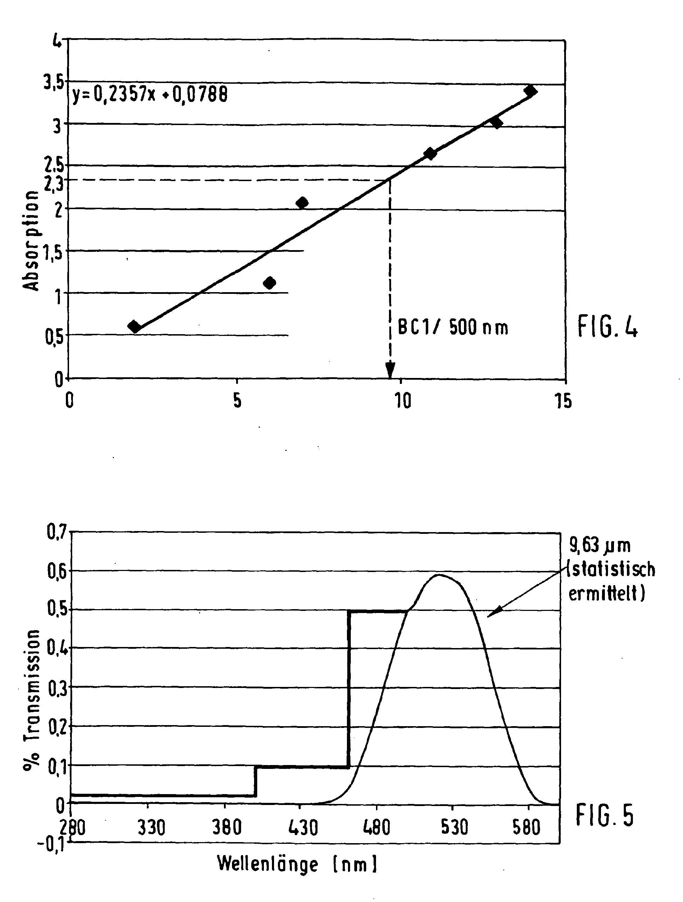

Um nach der Erfindung die Mindestschichtdicke der ersten Basislackschicht (BC1) zu ermitteln, werden z.B. sechs Proben S1, S2, S3, ... unterschiedlicher Schichtdicke D1, D2, D3, aus der Keillackierung für die erste Basislackschicht (BC1) nach Figur 2 geschnitten und deren Transmission bestimmt, worauf die Transmissionswerte entsprechend der vorstehenden Formel (1) in Absorptionswerte umgerechnet werden. Die Ergebnisse für die betreffende erste Basislackschicht (BC1) sind beispielhaft der beigefügten Figur 4 zu entnehmen, die die Regressionsgerade für die Absorption der ersten Basislackschicht (BC1) in Abhängigkeit von der Schichtdicke wiedergibt, und zwar beispielhaft für die Wellenlänge 500 nm.

Nach Tabelle 1 und Figur 1 darf die Transmission bei 500 nm höchstens 0,5 % betragen. Aus der vorstehenden Formel (1) ergibt sich damit:

$$Absorption = -\lg(0,005) = 2,3 \quad .$$

Nach dem Diagramm der Figur 4 bzw. der Gleichung der in Figur 4 dargestellten Regressionsgeraden y = 0,2357x + 0,0788 ergibt sich damit eine Schichtdicke von 9,43.

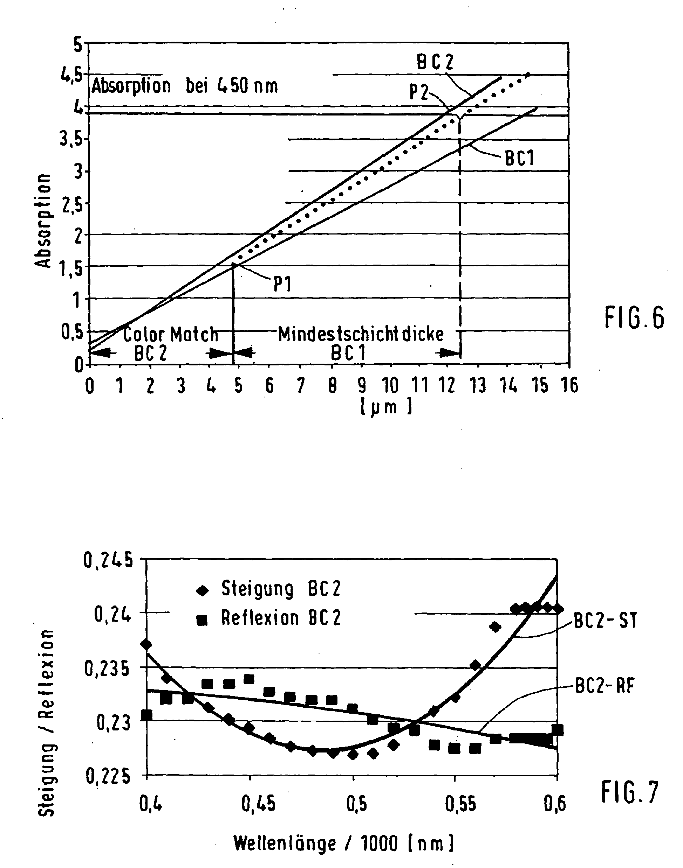

In Figur 5 ist das optimierte Diagramm nach Figur 1 und 3 für die maximale Transmission in Abhängigkeit von der Wellenlänge mit der gemessenen Transmission der ersten Basislackschicht (BC1) mit einer Schichtdicke von 9,63 $\mu$m verglichen. Danach stimmt der rechnerisch ermittelte Wert von 9,43 $\mu$m der Mindestschichtdicke der ersten Basislackschicht (BC1) mit dem experimentell ermittelten Wert von 9,63 $\mu$m mit einer Genauigkeit von 2 % überein.

Das vorstehende Beispiel bezieht sich jedoch nur auf die Transmission bzw. Absorption der ersten Basislackschicht (BC1). Zur Bestimmung des Lackaufbaus aus beiden Basislackschichten (BC1 und BC2) kann die Absorptionsgerade entsprechend Figur 4 sowohl für die erste Basislackschicht (BC1) wie für die zweite Basislackschicht (BC2) ermittelt werden.

Wie sich jedoch gezeigt hat, stimmen die so ermittelten Transmissions- bzw. Absorptionswerte nicht mit den Werten überein, die mit einer Keillackierung aus beiden Basislackschichten (BC1 und BC2) sowie der Klarlackschicht (CC) erhalten werden.

Wenn beide Basislackschichten (BC1 und BC2) getrennt spektroskopiert werden, besitzen beide zwischen der Basislackschicht und der Klarlackschicht eine Grenzfläche, an der Licht reflektiert wird. Da in der Lackierlinie die zweite Basislackschicht (BC2) auf die nasse erste Basislackschicht (BC1) appliziert wird, der Klarlack hingegen auf den getrockneten Basislack (BC1 und BC2), weist der in der Lackierlinie applizierte Lack jedoch nur zwischen der Klarlackschicht (CC) und der zweiten Basislackschicht (BC2) eine reflektierende Grenzfläche auf.

Zur genauen Ermittlung der Schichtdicke der ersten Basislackschicht (BC1) wird daher erfindungsgemäß die Reflexion des UV/VIS-Lichts an der Grenzfläche der Klarlackschicht (CC) zur zweiten Basislackschicht (BC2) berücksichtigt.

Die graphische Lösung zur Ermittlung der Schichtdicke der ersten Basislackschicht (BC1) unter Berücksichtigung dieser Reflexion ist in dem Diagramm nach Figur 6 beispielhaft dargestellt, und zwar für eine Absorption von mindestens 3,9. Wie aus Figur 6 ersichtlich, liegt der Wert der Absorption bei einer Schichtdicke von 0 $\mu$m bei etwa 0,2. Dieser Wert stellt die Reflexion dar. Weiterhin beträgt nach Figur 6 die vorgegebene Schichtdicke, also die "Color-Match"-Schichtdicke der farbgebenden zweiten Basislackschicht (BC2) 5 μm. Die Schichtdicke der ersten Basislackschicht (BC1) ergibt sich damit durch Parallelverschiebung der Geraden für die zweite Basislackschicht (BC2) zu dem Punkt P1 der Geraden für die erste Basislackschicht (BC1) bei 5 μm, wie durch die gepunktete, parallel verschobene Linie dargestellt. Wie aus dem gestrichelt dargestellten Lot vom Punkt P2 der gepunkteten Linie bei der Absorption von 3,9 dargestellt, ergibt sich damit für eine Absorption der beiden Basislackschichten (BC1 und BC2) eine Gesamtschichtdicke von 12,5 μm und damit eine Mindestschichtdicke der ersten Basislackschicht (BC1) von 7,5 μm.

Die Regressionsgeraden können durch Regressionsgeradengleichungen dargestellt werden. So wird die Regressionsgerade in Figur 4 z.B. durch die Gleichung

$$y = 0,2357x + 0,0788$$

wiedergegeben, und die Regressionsgerade für die zweite Basislackschicht (BC2) in Figur 6 durch die Gleichung

$$y = 0,2292x + 0,2337 \quad .$$

Dabei stellen 0,2357 und 0,2292 jeweils die Steigung der Geraden dar, wobei in Figur 6 die Steigung ST (BC1) für die erste Basislackschicht (BC1) 0,2131 beträgt.

Der Reflexionsanteil (RF) wird in den vorstehenden Regressionsgeradengleichungen durch 0,0788 bzw. 0,2337 wiedergegeben.

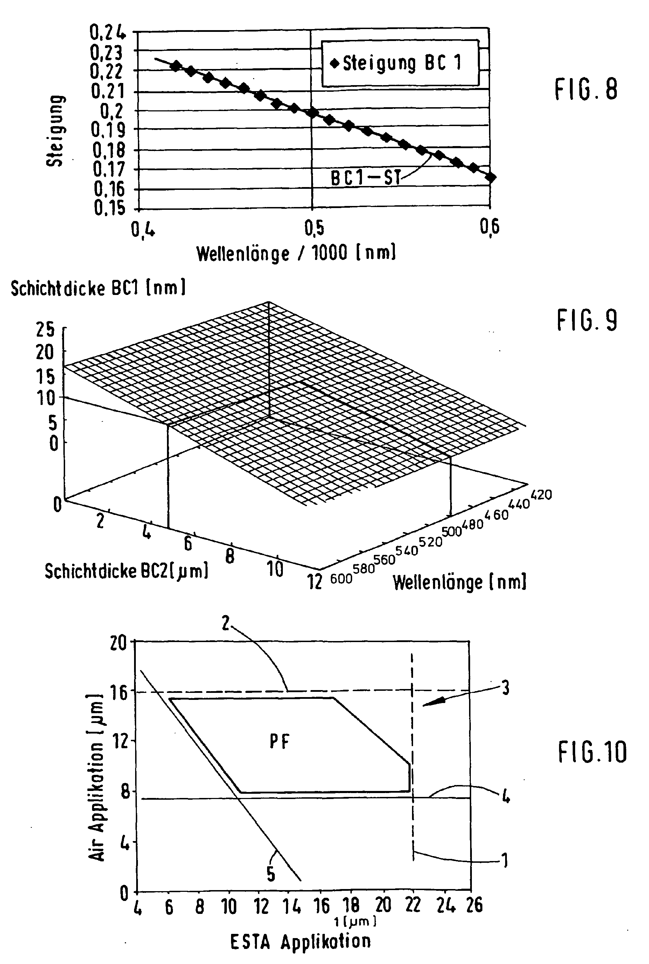

Die vorstehend beschriebene Methode kann für eine Wellenlänge angewendet werden. Um sich in einem Wellenlängenbereich zu bewegen, muss der Verlauf der Parameter ST (BC1), ST (BC2) und RF (BC2) dargestellt werden, so dass durch den Verlauf dieser Werte eine Funktion gefittet werden kann, deren Erstellung anhand der Diagramme der beigefügten Figuren 7 und 8 erfolgt, wobei in Figur 7 die Steigungen der Regressionsgeradengleichungen für die zweite Basislackschicht (BC2) bei den angegebenen Wellenlängen durch die Kurve BC2-ST und die Reflexion durch die Gerade BC2-RF wiedergegeben wird, während in Figur 8 die Steigung der Regressionsgeradengleichungen für die erste Basislackschicht (BC2) bei den angegebenen Wellenlängen durch die Gerade BC1-ST dargestellt wird. Die in Figur 7 und 8 dargestellte Kurve bzw. Geraden stellen Fit-Funktionen dar, die über die "Least Square"-Methode ermittelt wurden. Gleiches gilt im Übrigen auch für die Geraden in Figur 4 und 6.

Der Verlauf der Steigung der Regressionsgeraden des zweiten Basislacks (BC2) in Form einer Kurve gegenüber dem Verlauf der Steigung der Regressionsgeraden des ersten Basislacks (BC1) als Gerade gemäß Figur 7 und 8 ist darauf zurückzuführen, dass es sich bei dem zweiten Basislack (BC2) gemäß Figur 7 um einen Metallic-Lack und damit einen Lack hoher Lichtstreuung handelt.

D.h., erfindungsgemäß können anhand der Regressionsgeradengleichungen die Funktionen entwickelt werden, die den Verlauf der Steigungen der Regressionsgeraden der beiden Basislacke (BC1 und BC2) und den Verlauf der Reflexion der Klarlackschicht (CC) an der zweiten Basislackschicht (BC2) in Abhängigkeit von der Wellenlänge beschreiben, welche dann in folgende Formel (2) eingesetzt werden:

$$SD(BC1) = \frac{Abs - \{ST(BC2) \cdot SD(BC2) + RF(BC2)\}}{ST(BC1)} \qquad (2) \quad .$$

Darin bedeuten:

$SD(BC1)$ die Mindestschichtdicke der ersten Basislackschicht (BC1);

$Abs$ der Absorptionswert, der sich nach der Formel (1) aus den Grenzwerten der Lichttransmission für den jeweiligen Lackaufbau ergibt;

$ST(BC2)$ die Steigung der Regressionsgeraden der zweiten Basislackschicht (BC2);

$SD(BC2)$ die vorgegebene Schichtdicke der zweiten Basislackschicht (BC2);

*RF*(*BC*2) die Reflexion an der Grenzfläche zwischen Klarlackschicht (CC) und zweiter Basislackschicht (BC2);

*ST*(*BC*1) die Steigung der Regressionsgeraden der ersten Basislackschicht.

Aufgrund des Verlaufs der Steigungen der Regressionsgeraden der beiden Basislacke (BC1 und BC2) und des Verlaufs der Reflexion der Klarlackschicht (CC) an der zweiten Basislackschicht (BC2) in Abhängigkeit von der Wellenlänge kann die Schichtdicke der ersten Basislackschicht (BC1) auch graphisch ermittelt werden, wie anhand der beigefügten Figur 9 beispielhaft dargestellt. Daraus ergibt sich z.B. bei einer vorgegebenen Schichtdicke der zweiten Basislackschicht (BC2) von 4,7 $\mu$m bei einer maximalen Lichttransmission von 0,1 % bei 500 nm eine Schichtdicke der ersten Basislackschicht (BC1) von 10 $\mu$m.

Bestätigend wurden bei einem Kombinationsaufbau aus einem BC-Keil und einer BC2-Schicht konstanter Schichtdicke die in Tabelle 2 wiedergegebenen Schichtdicken für die erste Basislackschicht (BC1) ermittelt.

**Tabelle 2**

| | | | | | |
|---|---|---|---|---|---|
| | 2,9202 | 3,3508 | 3,4626 | 4,1532 | 550 nm |
| Absorption | 2,9529 | 3,4153 | 3,5626 | 4,2984 | 500 nm |
| | 3,0537 | 3,5558 | 3,7251 | 4,5043 | 450 nm |
| Schichtdicke BC2 gemessen | 10 | 11 | 7 | 10 | |
| Schichtdicke BC1 gemessen | 2 | 4 | 8 | 9 | |
| | 2,01 | 3,10 | 8,82 | 8,78 | 550 nm |
| Schichtdicke BC1 berechnet | 2,26 | 3,45 | 8,80 | 9,08 | 500 nm |
| | 2,50 | 3,80 | 8,89 | 9,32 | 450 nm |

Unter Berücksichtigung von weiteren lackspezifischen Parametern, wie maximal applizierbare elektrostatische Applikation (ESTA) und pneumatische Applikation (AIR) sowie die Popping- und Sagging-Schichtdicke (Kocher- und Läufergrenzschichtdicke) und die "Color-Match"-Schichtdicke des zweiten Basislacks (BC) (Farbdeckvermögenschichtdicke) ist es möglich, ein spezifisches Prozessfenster für jeden Farbton zu erzeugen, wie in der beigefügten Figur 10 beispielhaft dargestellt ist.

Darin bedeuten die gestrichelten Geraden 1 und 2 die maximal applizierbaren ESTA- bzw. AIR-Schichtdicken, der Bereich 3 die Popping- und Sagging-Schichtdicken, die Gerade 4 die "Color-Match"-Mindestschichtdicke des zweiten Basislacks (BC2) und die Gerade 5 die erfindungsgemäß berechnete Mindestschichtdicke des ersten Basislacks (BC1) zur Einhaltung der Lichttransmissionsgrenzwerte. Damit ergibt sich der mit durchgehenden Linien eingerahmte Bereich PF als Prozessfenster.

**Patentansprüche**

**1.** Verfahren zur Bestimmung der Schichtdicke eines füllerlosen Automobillacks aus mindestens zwei Basislackschichten (BC1 und BC2) und einer Klarlackschicht (CC),
**dadurch gekennzeichnet, dass**
die Grenzwerte der Lichttransmission für den jeweiligen Lackaufbau für unterschiedliche Wellenlängen im UV- und sichtbaren (UV/VIS-) Lichtbereich festgelegt werden, bei denen keine Delamination des füllerlosen Lacks auftritt, und die Mindestschichtdicke der ersten Basislackschicht (BC1) bei vorgegebener Schichtdicke der zweiten Basislackschicht (BC2) bestimmt wird durch

- Anfertigung je einer Keillackierung der ersten (BC1) und der zweiten (BC2) Basislackschicht mit einer Klarlackschicht,
- Entnahme von Proben (S1, S2, S3, ...) unterschiedlicher Schichtdicke der Keillackierungen,
- Messung der Lichttransmission der Proben bei unterschiedlichen Wellenlängen im UV/VIS-Bereich,
- Umrechnung der Lichttransmissionswerte in Absorptionswerte aufgrund des Lambert-Beerschen Gesetzes mit folgender Formel:

$$Absorption = -\lg(Transmission)$$

- Ermittlung der Regressionsgeraden für die Lichtabsorption in Abhängigkeit von der Schichtdicke für beide Basislackschichten (BC1 und BC2) für unterschiedliche Wellenlängen im UV/VIS-Bereich, und
- Bestimmung der Schichtdicke der ersten Basislackschicht (BC1) anhand der Regressionsgeraden für die beiden Basislackschichten (BC1 und BC2) für unterschiedliche Wellenlängen unter Vorgabe der Grenzwerte der Lichttransmission für den Lackaufbau.

2. Verfahren nach Anspruch 1, **dadurch gekennzeichnet, dass** bei der Bestimmung der Schichtdicke der ersten Basislackschicht (BC1) anhand der Regressionsgeraden die Reflexion des UV/VIS-Lichts an der Grenzfläche der Klarlackschicht (CC) zu der zweiten Basislackschicht (BC2) berücksichtigt wird.

3. Verfahren nach Anspruch 1 und 2, **dadurch gekennzeichnet, dass** aufgrund der Regressionsgeraden die Regressionsgeradengleichungen für die beiden Basislacke (BC1 und BC2) bei unterschiedlichen Wellenlängen im UV/VIS-Bereich bestimmt und anhand der Regressionsgeradengleichungen die Funktionen entwickelt werden, die den Verlauf der Steigungen der Regressionsgeraden der beiden Basislacke (BC1 und BC2) und den Verlauf der Reflexion der Klarlackschicht (CC) an der zweiten Basislackschicht (BC2) in Abhängigkeit von der Wellenlänge beschreiben und diese Funktionen in folgende Formel eingesetzt werden, um die Mindestschichtdicke der ersten Basislackschicht unter Vorgabe der Grenzwerte für die Lichttransmission für den Lackaufbau zu bestimmen,

$$SD(BC1) = \frac{Abs - \{ST(BC2) \cdot SD(BC2) + RF(BC2)\}}{ST(BC1)} \quad ,$$

worin bedeuten:

$SD(BC1)$ die Mindestschichtdicke der ersten Basislackschicht (BC1);
$Abs$ der Absorptionswert, der sich nach der Formel (1) aus den Grenzwerten der Lichttransmission für den jeweiligen Lackaufbau ergibt;
$ST(BC2)$ die Steigung der Regressionsgeraden der zweiten Basislackschicht (BC2);
$SD(BC2)$ die vorgegebene Schichtdicke der zweiten Basislackschicht (BC2);
$RF(BC2)$ die Reflexion an der Grenzfläche zwischen Klarlackschicht (CC) und zweiter Basislackschicht (BC2);
$ST(BC1)$ die Steigung der Regressionsgeraden der ersten Basislackschicht.

4. Verfahren nach Anspruch 1, **dadurch gekennzeichnet, dass** der UV/VIS-Bereich, für den die Lichttransmissionsgrenzwerte festgelegt werden, zumindest den Bereich von 280 nm bis 500 nm umfasst.

5. Anwendung des Verfahrens nach einem der Ansprüche 1 bis 4 zur Bestimmung des Prozessfensters (PF) für die Lackierung in der Lackierlinie, wobei sich das Prozessfenster (PF) aus den maximal applizierten Schichtdicken (1, 2), der "Popping- und Sagging"-Schichtdicke (3), der "Color-Match"-Schichtdicke (4) der zweiten Basislackschicht (BC2) und der nach einem der Ansprüche 1 bis 4 bestimmten Mindestschichtdicke der ersten Basislackschicht (BC1) ergibt.

**Claims**

1. A method of determining the thickness of an extender-free car paint comprising at least two base coats (BC1 and BC2) and a clear coat (CC),
   **characterised in that**
   the limiting light-transmission values for each paint structure at which no separation of the extender-free coat occurs are calculated for various wavelengths in the UV and visible (UV/VIS) light region, and
   the minimum thickness of the first base coat layer (BC1) at a set thickness of the second base coat (BC2) is determined by

- preparation of a paint wedge of the first base coat (BC1) and the second base coat (BC2), in each case with a clear coat,
- removal of samples (S1, S2, S3, ...) of paint-wedge coats of different thickness,
- measuring the light transmission of the samples at different wavelengths in the UV/VIS region,
- conversion of the light transmission values into absorption values, using the Lambert-Beer law with the following formula:

$$absorption = -\lg (transmission),$$

- determination of the regression lines for the light absorption in dependence on the thickness of both base coats (BC1 and BC2) at different wavelengths in the UV/VIS region, and
- determination of the thickness of the first base coat from the regression lines for the two base coats (BC1 and BC2) at different wavelengths, at preset light transmission values for the paint structure.

2. A method according to claim 1, **characterised in that** when the thickness of the first base coat (BC1) is being determined from the regression lines, account is taken of the reflection of UV/VIS light at the interface between the clear coat (CC) and the second base coat (BC2).

3. A method according to claim 1 and 2, **characterised in that** on the basis of the regression lines the regression-line equations are calculated for the two base coats (BC1 and BC2) at different wavelengths in the UV/VIS region and the regression-line equations are used to develop the functions which describe the shape of the gradient of the regression lines of the two base coats (BC1 and BC2) and the shape of the reflection of the clear coat on the second base coat (BC2) in dependence on the wavelength and these functions are inserted into the following formula in order to determine the minimum thickness of the first base layer at a set limiting value of the light transmission of the paint structure:

$$SD(BC1) = \frac{Abs - \{ST(BC2) \cdot SD(BC2) + RF(BC2)\}}{ST(BC1)}$$

where

$SD(BC1)$ denotes the minimum thickness of the first base coat (BC1);
$Abs$ denotes the absorption value obtained by formula (1) from the limiting light transmission values for the respective paint structure;
$ST(BC2)$ denotes the gradient of the regression lines of the second base coat (BC2);
$SD(BC2)$ denotes the set thickness of the second base coat (BC2);
$RF(BC2)$ denotes the reflection at the interface between the clear coat (CC) and the second base coat (BC2);
$ST(BC1)$ denotes the gradient of the regression line of the second base coat.

4. A method according to claim 1, **characterised in that** the UV/VIS range over which the light transmission limiting values are determined comprises at least the range from 280 nm to 500 nm.

5. Use of the method according to any of claims 1 to 4 for determining the process window (PF) for painting in the paint industry, wherein the process window (PF) is obtained from the maximum applied thickness (1, 2), the "popping and sagging" thickness (3), the "colour match" thickness (4) of the second base coat (BC2) and the minimum thickness of the first base coat (BC1) obtained according to any of the claims 1 to 4.

**Revendications**

1. Procédé de détermination de l'épaisseur de couche d'une peinture automobile sans couche de fond constituée d'au moins deux couches de peinture de base (BC 1 et BC2) et d'une couche de vernis (CC),
**caractérisé en ce qu'**
on détermine les valeurs limite de la transmission de la lumière pour la structure de peinture respective pour différentes longueurs d'onde dans le domaine de la lumière UV et visible (UV/VIS) pour lesquelles aucun délaminage de la peinture sans couche de fond ne se produit, et

on détermine l'épaisseur de couche minimale de la première couche de peinture de base (BC1) pour une épaisseur de couche prédéterminée de la deuxième couche de peinture de base (BC2) par

- réalisation de chaque fois une peinture en coin de la première (BC1) et de la deuxième (BC2) couche de peinture de base avec une couche de vernis,
- prélèvement d'échantillons (S1, S2, S3,...) de différentes épaisseurs de couche des peintures en coin,
- mesure de la transmission de lumière des échantillons pour différentes longueurs d'onde dans le domaine UV/VIS,
- conversion des valeurs de transmission de lumière en valeurs d'absorption sur la base de la loi de Lambert-Beersche à l'aide de la formule suivante :

$$Absorption = -1g\ (Transmission)$$

- détermination des droites de régression pour l'absorption de la lumière en fonction de l'épaisseur de couche pour les deux couches de peinture de base (BC1 et BC2) pour différentes longueurs d'onde dans le domaine UV/VIS, et
- détermination de l'épaisseur de couche de la première couche de peinture de base (BC1) à l'aide des droites de régression pour les deux couches de peinture de base (BC 1 et BC2) pour différentes longueurs d'onde par la prédétermination des valeurs limite de la transmission de lumière pour la structure de peinture.

**2.** Procédé selon la revendication 1,
**caractérisé en ce que**
lors de la détermination de l'épaisseur de couche de la première couche de peinture de base (BC1) à l'aide des droites de régression, on prend en compte la réflexion de la lumière UV/VIS au niveau de l'interface entre la couche de vernis (CC) et la deuxième couche de peinture de base (BC2).

**3.** Procédé selon les revendications 1 et 2,
**caractérisé en ce que**
sur la base des droites de régression, on détermine les équations de droites de régression pour les deux peintures de base (BC 1 et BC2) pour différentes longueurs d'onde dans le domaine UV/VIS et à l'aide des équations de droites de régression, on développe les fonctions qui décrivent le tracé des pentes des droites de régression des deux peintures de base (BC1 et BC2) et le tracé de la réflexion de la couche de vernis (CC) au niveau de la deuxième couche de peinture de base (BC2) en fonction de la longueur d'onde et on utilise des fonctions dans la formule suivante, pour déterminer l'épaisseur de couche minimale de la première couche de peinture de base en prédéterminant les valeurs limite pour la transmission de la lumière pour la structure de peinture,

$$SD(BC1) = \frac{Abs - \{ST(BC2) \cdot SD(BC2) + RF(BC2)\}}{ST(BC1)}$$

avec :

SD(BC1) Epaisseur de couche minimale de la première couche de peinture de base (BC1) ;
Abs Valeur d'absorption obtenue selon la formule (1) à partir des valeurs limite de la transmission de lumière pour la structure de peinture respective ;
ST(BC2) Pente des droites de régression de la deuxième couche de peinture de base (BC2) ;
SD(BC2) Epaisseur de couche prédéterminée de la deuxième couche de peinture de base (BC2) ;
RF(BC2) Réflexion au niveau de l'interface entre la couche de vernis (CC) et la deuxième couche de peinture de base (BC2) ;
ST(BC1) Pente des droites de régression de la première couche de peinture de base.

**4.** Procédé selon la revendication 1,
**caractérisé en ce que**

la zone UV/VIS pour laquelle on détermine les valeurs limite de transmission de la lumière comprend au moins la plage comprise entre 280 nm et 500 nm.

5. Utilisation du procédé selon l'une des revendications 1 à 4, pour la détermination de la fenêtre de processus (PF) pour la peinture sur la chaîne de peinture, la fenêtre de processus (PF) résultant des épaisseurs de couche maximales appliquées (1, 2), de l'épaisseur de couche de « cratère et coulure » (3), de l'épaisseur de couche de « contre-typage » (4) de la deuxième couche de peinture de base (BC2), et de l'épaisseur de couche minimale déterminée selon l'une des revendications 1 à 4 de la première couche de peinture de base (BC1).

FIG.1

FIG.2

FIG. 3

$y = 0,2357x + 0,0788$

Absorption

BC1/ 500 nm

FIG. 4

% Transmission

9,63 μm
(statistisch
ermittelt)

Wellenlänge [nm]

FIG. 5

11

FIG.6

FIG.7

FIG. 8

Steigung

◆ Steigung BC 1

BC1-ST

Wellenlänge / 1000 [nm]

FIG. 9

Schichtdicke BC1 [nm]

Schichtdicke BC2 [μm]

Wellenlänge [nm]

FIG. 10

Air Applikation [μm]

PF

ESTA Applikation

1 [μm]